# EUROPEAN PATENT APPLICATION

(11) **EP 4 141 723 A1**
(43) Date of publication of application: **01.03.2023**
(21) Application number: 21306149.2
(22) Date of filing: 25.08.2021
(51) Int. Cl.: G06F 21/64, H04L 9/32

(54) **VERIFYING SIGNATURES**

(71) Applicant: Hewlett-Packard Development Company, L.P., Spring TX 77389 (US)
(72) Inventor: LAING, Thalia May, Bristol, BS1 6NP (GB); SCHIFFMAN, Joshua Serratelli, Bristol, BS1 6NP (GB); BALACHEFF, Boris, 92190 Meudon (FR); BALDWIN, Adrian John, Bristol, BS1 6NP (GB); DALTON, Christopher Ian, Bristol, BS1 6NP (GB); JEANSONNE, Jeffrey Kevin, Spring, 77389 (US)
(74) Representative: Haseltine Lake Kempner LLP

(57) **Abstract**

In an example, a method is described. The method comprises receiving a log comprising information about a computing system. The log is sent by a computing device associated with the computing system. The computing device comprises a first identity bound to a third identity of a certificate authority (CA) and a second identity bound to the first identity. The method further comprises receiving a signature for the log. The method further comprises verifying a certificate indicative of the second identity having been certified. The method further comprises verifying the received signature.

## Description

### BACKGROUND

A computing system may produce data responsive to events that occur as part of activities within the computing system. Analytic techniques may be used to analyze the behavior of the computing system based on the produced data.

### BRIEF DESCRIPTION OF DRAWINGS

Non-limiting examples will now be described with reference to the accompanying drawings, in which:
Figure 1 is a flowchart of an example method of verifying a signature;
Figure 2 is a schematic drawing of an example architecture for implementing certain methods, machine-readable media and apparatus described herein;
Figure 3 is a flowchart of an example method showing the flow of data between the various entities;
Figure 4 is an example method of verifying a certificate;
Figure 5 is an example method of verifying certain information;
Figure 6 is an example method of receiving a certificate;
Figure 7 is a schematic illustration of an example apparatus for implementing or at least partially facilitating functionality associated with certain entities described herein;
Figure 8 is a schematic illustration of an example apparatus for implementing or at least partially facilitating functionality associated with certain entities described herein;
Figure 9 is a simplified schematic drawing of an example machine-readable medium associated with certain entities described herein; and
Figure 10 is a simplified schematic drawing of an example machine-readable medium associated with certain entities described herein; and
Figure 11 is a simplified schematic drawing of an example machine-readable medium associated with certain methods, machine-readable media and apparatus described herein; and
Figure 12 is a simplified schematic drawing of an example apparatus associated with certain methods, machine-readable media and apparatus described herein.

### DETAILED DESCRIPTION

A computing system (e.g., implemented by a personal computer, laptop, tablet, phone, embedded system, Internet of Things (IoT) device, printer or computing network comprising a plurality of computing nodes, etc.) may generate information regarding events that occur in the computing system and/or other information about the computing system. For example, such information may be generated as part of, or in response to, activities that occur within the computing system (e.g., where an activity may be associated with at least one event that occurs as part of the activity).

Examples of activities that may occur during use of a computing system include: system booting, user log-in/log-out requests, software updates, admin-controlled changes, connecting to/disconnecting from networks, opening/running/closing of applications, connecting/disconnecting peripherals, sending/receiving identities, sending response requests/receiving indications of responses to such requests, etc. The types of activities that occur may depend on the type of computing system. For example, a computing system such as a personal computer or laptop may have a broad range of functionality with multiple possible activities that may occur during use of the personal computer/laptop (e.g., including the example activities listed above) while an embedded system may have a comparatively restricted range of activities (e.g., related to the intended function of the embedded system itself) that may occur during use of the embedded system.

In some examples, a computing device (e.g., a computing device hosted by the computing system itself or a computing device associated with a computing system such as a computing network comprising a plurality of nodes) may produce or collect a log (such as a record, system log or 'syslog', etc.) comprising information about the computing system. For example, such information about the computing system may be regarding an event that has occurred as part of, or in response to, an activity that occurs within the computing system. In an example, a log may be produced as part of, or in response to, a single event that occurs as part of a single activity within the computing system. In another example, multiple logs may be produced as part of, or in response to, corresponding multiple events that occur as part of a single activity within the computing system. In another example, such information about the computing system may comprise or be indicative of an identity of another (responding) component on the computing device or computing system and/or whether such a component is responding, etc.

In some examples, a log may comprise 'identifying information' associated with the computing system. For example, the identifying information may identify a user and/or a component of the computing system itself (e.g., by using a user identifier and/or a component identifier). In some examples, the log may comprise information about an event (e.g., an event code, event description or some other indication of the type of event, a time of the event, etc.). Thus, in some examples, the log may comprise 'information about the computing system', where the information may comprise the 'identifying information' and/or the information about the event itself.

In some examples, the computing system may host the computing device, which may collect or generate information for a log (e.g., based on an event that occurs within the computing system). In an example, the computing system comprises a web client to facilitate user interaction with a web-based service. The computing system may collect information about the user's activity and the computing device may produce a log comprising the information. In another example, the computing system comprises an embedded system (e.g., of a printer or Internet of Things (IoT) device, etc.) which produces logs in response to execution of code by the embedded system (e.g., due to events that occur on the embedded system).

In some examples, a computing device associated with the computing system may collect or generate information for a log based on an event that occurs upstream of the computing device (e.g., in another node of the computing system). In an example, the computing device may be implemented by a node of a computing system and may receive information from another node of the computing system (e.g., the web client or embedded system described above) and produce a log based on the received information.

In some examples, a computing system may comprise processing circuitry (e.g., comprising a processor) for executing instructions for implementing certain functionality. For example, a computing system may implement functionality such as executing a subroutine as part of an event that occurs within the computing system, producing a log (e.g., in response to executing the subroutine or in response to receiving information from the computing system indicative of an event that occurs elsewhere in a different node of the computing system), sending a log to another node in the computing system, etc.

In some examples, the computing system produces logs comprising the information (e.g., regarding events that occur on the computing system) and the computing device collects the corresponding logs. In some examples, the computing system generates information (e.g., in response to events that occur on the computing system) and the computing device produces corresponding logs based on the generated information.

In some examples, a log may be stored in a memory of a computing device associated with the computing system such as an End-point Security Controller (EpSC) or another controller and/or may be sent to some other location such as a server (e.g., the log may be sent in a telemetry message). In some examples, a computing device such as an EpSC may be an independent component of a computing system that may perform a security function to ensure correct operation of the computing system in case of any incidents that may change the settings of the computing system (e.g., due to system errors, malware attacks, etc.). A computing device such as an EpSC may produce and/or collect logs in response to the events that occur within the computing system. In some examples, such logs may be stored on the computing device, on the computing system and/or sent to a requesting entity such as a remote admin.

In some examples, a log may be stored in a memory of the computing system itself but external to the computing device. For example, a computing device such as an EpSC may secure the log (e.g., using a symmetric primitive for which it stores the key, such as by using authenticated encryption e.g., Advanced Encryption Standard with Galois Counter Mode (AES-GCM) or by using a Message Authentication Code (MAC) tag) and then storing the secured log in memory external to the EpSC but still on the computing system. Storing the secured log elsewhere on the computing system rather than on the computing device itself may be useful if the computing device has memory restrictions.

A set of logs may be collectively indicative of certain information about the computing system such as the performance of the computing system, end-user behavior, suspicious activity, etc. In some examples, logs may be collected directly from computing systems or computing devices or from a networked collector node, for example, a cloud or syslog server.

Data analytics may be implemented to produce alerts, metrics and/or statistics (i.e., 'output') based on the set of logs. This output may be reviewed, for example by a human operator or an artificial intelligence-based operator, to determine whether or not the computing system is behaving as expected.

Data analytics may refer to a range of data processing techniques and may include machine learning-based techniques. The data analytics may be of varying complexity and may contain various configurable thresholds and parameter choices to filter and manipulate the input data (e.g., logs) to produce output (e.g., an inference about a computing system). Adjusting these choices may result in different analytic output. Some analytical tools may filter and/or aggregate the data collected from a computing system (e.g., comprising a plurality of nodes).

Enterprise information technology and security administrators (e.g., 'remote admin') may actively track activity of a network in an attempt to spot anomalous activity within the network.

### Verifying Signatures

In some examples, a computing system may comprise or be associated with a computing device such as an End-point Security Controller (EpSC) or other microcontroller. Such computing devices may be independent components associated with the computing system, either as part of the computing system itself or otherwise communicatively coupled to the computing system. In some examples, the computing device may perform security-relevant operations and/or load configuration data that may affect the integrity of the computing system. A third-party such as a remote admin may wish to collect evidence of such operations to verify the correct operation of the computing system's components e.g., as part of ongoing fleet management to detect deviation from a policy, or for auditing and analytics, amongst other purposes. The remote admin may wish to authenticate data from the computing device to ensure the data has not been maliciously altered, and that the data is derived from an expected computing device (i.e., a computing device of a certain identity) and/or is associated with an expected computing system.

In some examples, certain components of a computing system such as an EpSC may not have a persistent identity. Thus, even if an EpSC were to sign logs comprising information about the computing system, the remote admin may not be able to provably link the data to the expected EpSC. In some cases, it may not be economically feasible for such components of a computing system to have a certified identity.

From the perspective of the computing system, certain components of an associated computing device may generate or collect logs comprising information about the computing system (e.g., a generating component' for generating and/or collecting logs such as an EpSC). In some examples, certain other components of the computing device may have a certified identity (e.g., a secure component such as a trusted platform module (TPM)). A third-party such as a remote admin may receive logs generated or collected by the computing device (e.g., by the 'generating component' of the computing device). Thus, in some examples, the computing device may comprise both a 'secure component' and a 'generating component'.

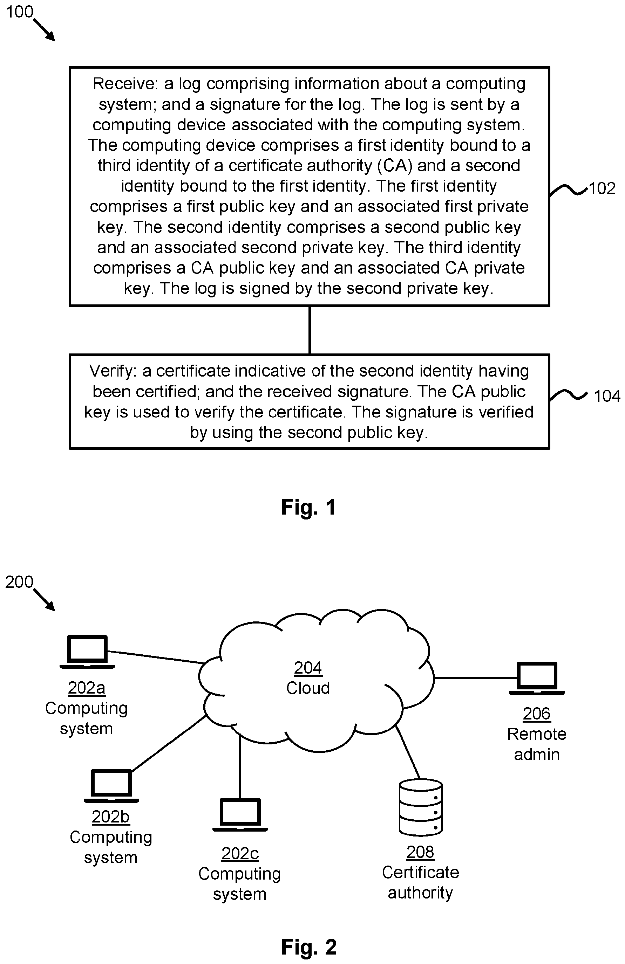

Figure 1 depicts a flowchart of an example method 100 of verifying a signature. The method 100 may be a computer-implemented method (e.g., using processing circuitry). The method 100 may be implemented by a third party such as a remote admin that wishes to establish whether or not a log it receives has been sent by an expected computing device and/or associated computing system of a certain identity.

The method 100 comprises receiving, at block 102, a log comprising information about a computing system. The log is sent by a computing device (e.g., a component of the computing device such as an EpSC or TPM) associated with the computing system.

In some examples, the computing device may be associated with the computing system by virtue of being on the same platform as the computing system (e.g., the computing system may host the computing device). In some examples, the computing device may be associated with the computing system by virtue of being communicatively coupled to the computing system to generate or collect information about the computing system. In some examples, the computing device may be an example of certain 'apparatus' described herein or may implement the functionality of certain machine-readable media described herein.

The computing device comprises a first identity bound to a third identity of a certificate authority (CA). The computing device further comprises a second identity bound to the first identity. Thus, the second identity may be bound to the first identity so that there is a cryptographic link from the second identity to the third identity via the first identity.

The first identity comprises a first public key and an associated first private key.

The second identity comprises a second public key and an associated second private key.

The third identity comprises a CA public key and an associated CA private key.

In some examples, the first and second identities may be associated with different or the same components of the computing device. As explained in more detail below, the computing device may comprise various components such as a secure component (e.g., a TPM) and a generating component (e.g., an EpSC).

In some examples, the secure component may have the first identity.

In some examples, the generating component may have the second identity, which may not initially be certified (e.g., when the computing system is initially deployed in the field). The second identity may not need to be generated at the same time as the first identity. For example, the second identity could be re-generated periodically, generated in response to a command or otherwise generated after the first identity has been generated.

In some examples, the secure component may have the second identity.

Block 102 of the method 100 further comprises receiving a signature for the log, where the log is signed by the second private key. Thus, the computing device (e.g., the generating component or the secure component of the computing device) may sign the log.

The method 100 further comprises, at block 104, verifying (e.g., using processing circuitry) a certificate indicative of the second identity having been certified. The CA public key is used to verify the certificate.

Block 104 further comprises verifying the received signature by using the second public key.

Thus, the method 100 may establish whether there is a cryptographic link between the second identity and the third identity. Examples described herein refer to various ways that the certificate can be indicative of the second identity having been certified. Since the CA public key is used to verify the certificate, the third party may establish that the second identity is cryptographically bound to the third identity, which may be a trusted or otherwise established identity associated with a CA. Once the third party has established that the second identity is certified, any logs signed using the second identity can be trusted as having come from the expected device by using the second public key to verify the signature applied to such logs.

Certain examples described herein (e.g., including method 100) may allow a third party to authenticate various information about a computing system such as analytics data produced based on activity of the computing system, firmware integrity and/or configuration measurements, etc. The (second) public key used to verify the signature on the received log may be certified based on a certified (first) identity associated with the computing device. The (second) public key may be updatable, yet can still be certified, in the field e.g., by relying on the certified (first) identity.

Certain examples described herein may allow an admin managing a fleet of computing systems to authenticate analytics data produced by the fleet, which may be useful for managing such fleets, verifying trustworthiness of a platform and auditing. Certain examples described here may also allow the 'generating component' to update (and certify) its identity as and when needed (such as when the computing system's owner changes hands in a Device as a Service (DaaS) context).

Figure 2 is a schematic drawing of an example architecture 200 for implementing certain methods, machine-readable media and apparatus described herein. The example architecture 200 comprises a plurality of computing systems 202a, 202b, 202c. Each computing system 202a-c may comprise a computing device (not shown) such as referred to in the method 100. The computing systems 202a-c are communicatively coupled to a cloud 204. A third party (referred to as a 'remote admin' 206) is also communicatively coupled to the cloud 204. The remote admin 206 receives logs comprising information about the computing systems 202a-c. The architecture 200 further comprises a certificate authority (CA) 208 storing certificates for certifying identities associated with the computing systems 202a-c. According to certain examples described herein (e.g., the method 100), the remote admin 206 may be able to verify the logs sent to it by each of the computing systems 202a-c based on certain certificates and/or the (third) identity of the CA.

Thus, the remote admin 206 may have confidence that the data it receives is from an expected device in the field.

Different architectures are possible. For example, the link between the computing systems 202a-c and the remote admin 206 may be via a server instead of cloud 204. In some cases, the computing device (as referred to in the method 100) may be a separate entity to the computing systems. For example, the computing device may be communicatively coupled to a computing system (e.g., comprising one or a plurality of nodes). An example may be where the computing device is implemented as a networked data collector that collects data from a plurality of nodes (i.e., computing systems) communicatively coupled to the computing device. In some examples, the computing device(s) associated with the computing systems 202a-c may implement a certificate authority. In some examples, the computing systems 202a, 202b, 202c could be part of the same network (e.g., associated with the same organization) or could be part of different networks. As shown in Figure 2, each computing system 202a, 202b, 202c is represented as an individual computing node. In some examples, a computing system 202a, 202b, 202c may comprise a plurality of computing nodes (e.g., each computing system may represent a network of computing nodes where each computing node is implemented by a different device).

A description of the entities (e.g., as indicated by the description of Figure 2) involved in implementing certain methods described herein is now given.

As noted above, a computing device for producing or collecting logs based on data produced by an associated computing system may have various components, including a secure component (having a certified identity) and a generating component (which may not initially have a certified identity but may be used for producing or collecting the logs).

In some examples, the secure component (e.g., a TPM) may generate a long-term identity (e.g., a 'first identity' comprising a first key pair (i.e., a first public key, Spk, and an associated first private (or 'secret') key, Ssk) at a point in the supply chain where the CA 208 can collect the first public key, Spk. In some examples, the secure component may also generate the second identity. In some examples, the secure component may implement a certificate authority.

In some examples, the generating component (e.g., an EpSC) may generate the second identity (i.e., a 'second identity' comprising a second key pair (i.e., a second public key, Gpk, and an associated second private (or 'secret') key, Gsk)).

In some examples, the first identity may be used to certify the second identity, where the first identity has already been certified by the CA 208. In some examples, the third identity associated with the CA 208 may be used to certify the second identity subject to the second identity having been signed using the (certified) first identity.

In some examples, the generating component is a component on the same platform as the secure component.

In some examples, the generating component is a component that is responsible for generating analytics data (e.g., the generating component may produce logs based on firmware integrity measurements, or other data to report the state or configuration of the computing system).

In some examples, the generating component cannot (or it is infeasible for the generating component to) generate an identity at a point in which the CA 208 can collect the (second) public key.

In some examples and in contrast to the secure component, it may be useful for the generating component to not have a static, long term identity, and instead be able to generate multiple identities (for example, in the DaaS model, where the generating component may need a new identity for each tenant).

In some examples, the certificate authority 208 may be a trusted authority associated with the 'third identity' (i.e., comprising a third key pair (i.e., a third public key, Cpk, and an associated third private (or 'secret') key, Csk)). In some examples, the third public key, Cpk may be available for all third parties to use. In some examples, the certificate authority 208 may be implemented by a remote server e.g., at a secure location. In some examples, the certificate authority may be implemented by the secure component itself.

In some examples, the third-party entity such as the remote admin 206 may be a manager/admin of the platform (i.e., computing system) on which the generating and secure component presides.

In some examples, the third-party entity may be local to the platform itself or may be remote (as shown by Figure 2).

In some examples, the third party may wish to collect and view the analytics data generated by the generating component, and have some assurance that the data they receive is the same data the generating component sent (i.e., that the data has integrity and is authentic).

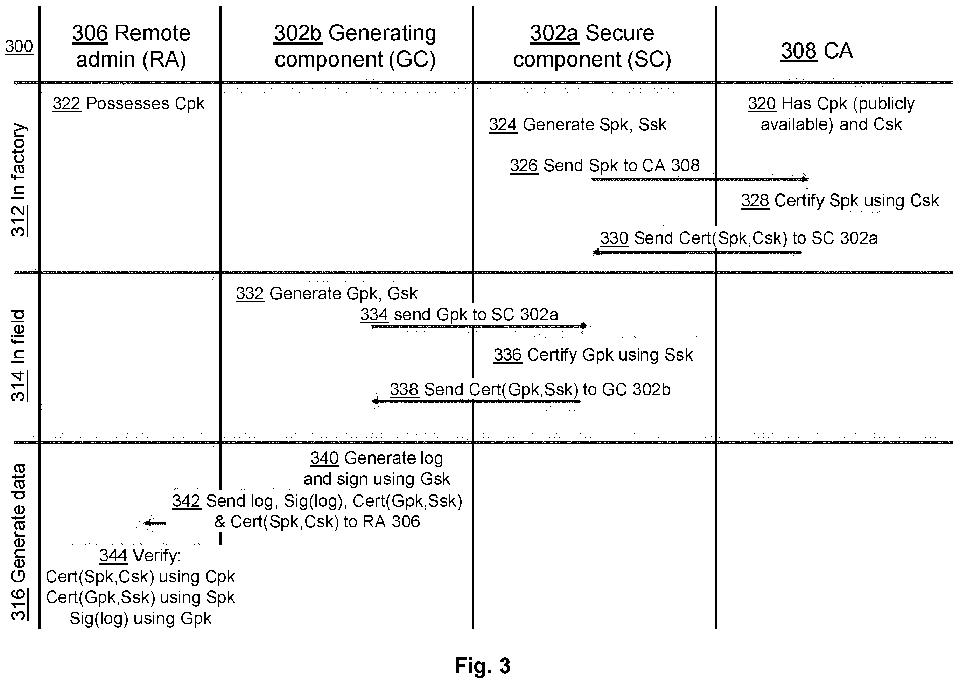

Figure 3 is a flowchart of an example method 300 showing the flow of data (including keys, certificates, etc.) between the various entities described above in relation to Figure 2 for implementing certain examples described herein at different points of deployment. In this example, the entities are the secure component (SC) 302a and the generating component (GC) 302b of the computing device, the remote admin 306 and the CA 308. The points of deployment are shown in the depicted rows: 'in the factory' 312 where the first identity is collected in a secure environment; 'in the field' 314 where the computing device is deployed; and 'data generation' 316 where data from the computing system is used for producing/collecting logs by the GC 302b.

In some examples, the public portion of the key pair Gpk, Gsk may not be collected in the factory, due to either supply chain processes or a need to have a non-static Gpk. Thus, Figure 3 depicts an example method to allow the remote admin 306 to verify logs produced/collected by the GC 302b based on a binding between the second and third identities, via the first identity. Various parts of the example method are described below. Where appropriate, these parts may be performed in a different sequence to that shown by Figure 3 and described below.

At part 320, the CA 308 establishes its own identity (i.e., the third identity comprising Cpk and Csk). In some examples, the Cpk may be publicly available or at least available to certain entities.

At part 322, the remote admin 306 may be provided with Cpk so that the remote admin 306 possesses Cpk.

In the factory, at part 324, the secure component 302a is given or generates an asymmetric signing key pair (i.e., the 'first identity' comprising Spk, Ssk). The public portion, Spk, is sent to the CA 308 at part 326 and certified by the CA 308 using Csk at part 328. The resulting certificate, Cert(Spk,Csk) is sent to the secure component 302a at part 330.

Key generation (e.g., in the field or at another deployment point) is now described

The generating component 302b generates an asymmetric signing key pair (i.e., the 'second identity' comprising Gpk, Gsk) at part 332. The generating component 302b may have a secure/trusted connection or may establish a secure/trusted connection with the secure component 302a. It may be assumed that a secure (e.g., authenticated) channel between the secure and generating components 302a, 302b is possible. For example, in the case of the secure component 302a comprising a TPM and the generating component 302b comprising an EpSC, the EpSC and TPM may establish a secure channel through the platform basic input/output system (BIOS) during pre-boot, but with the EpSC establishing a secure channel with the BIOS, and then BIOS communicating with the TPM. In some examples, the channel may be end-to-end secure, but this may not always be the case.

At part 334, the generating component 302b sends Gpk to the secure component 302a. At part 336, the secure component 302a certifies Gpk using Ssk. At part 338, the secure component 302a sends the resulting certificate, Cert(Cpk,Ssk) to the generating component 302b.

Data generation (i.e., production/collection of logs) is now described.

At part 340, the generating component 302b generates or collects analytics data (i.e., in a 'log') to send to the remote admin 306. The data may be generated at the request of the remote admin 306, periodically, or in response to an event. The generating component 302b also signs the log using Gsk.

At part 342, the generating component 302b sends the log, the signature on the log (i.e., 'Sig(log)'), the certificate on Gpk (i.e., 'Cert(Gpk, Ssk)') and the certificate on Spk (i.e., 'Cert(Spk,Csk)') to the remote admin 306.

In some examples, the package comprising the log, Sig(log), Cert(Gpk, Ssk) and Cert(Spk,Csk) may be sent to the remote admin 306 in response to a request from the remote admin 306 or the package may be sent periodically or in response to some other event. In some examples, the generating component 302b may receive a nonce from the remote admin 306 e.g., when requesting the log. The generating component 302b may include the nonce in the log and then sign the log. The nonce may prove to the remote admin 306 that the log has been freshly generated.

Any third party (such as remote admin 306) with access to the CA's public key Cpk can then authenticate the received data, at part 344, received by verifying the certificate on Spk using Cpk, verifying the certificate on Gpk using Spk and verifying the signature on the log using Gpk. In response to successful verification, the third party may establish that the log is authentic (i.e., from an expected computing device and/or associated computing system).

At any point, the generating component 302b could generate a fresh key pair and receive a new certificate from the secure component 302a. This may be useful if, for example, the device is part of a Device as a Service (DaaS) system and changes tenants, and so correspondingly the generating component 302b updates its keys.

In some examples, the certificate(s) may be sent via different channels. For example, instead of the certificates being sent to the generating component 302b for sending to the remote admin 306, either or both of the certificates Cert(Gpk,Ssk) and/or Cert(Spk,Csk) may be sent by another entity to the remote admin 306.

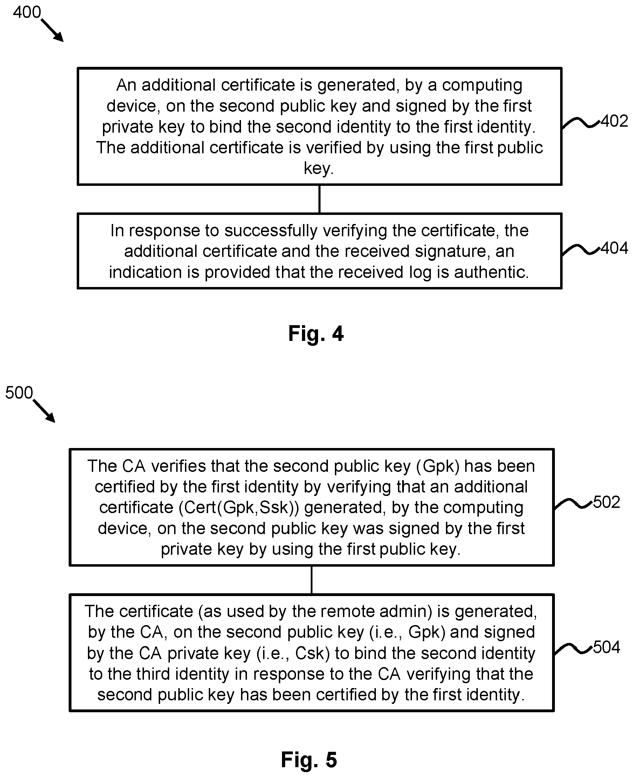

Figure 4 shows an example method 400 of verifying a certificate. The method 400 may be a computer-implemented method (e.g., using processing circuitry). The method 400 may be implemented by a third party such as a remote admin that wishes to establish whether or not a log it receives has been sent by an expected computing device and/or associated computing system of a certain identity. The method 400 may comprise or be implemented in conjunction with the method 100. Reference is made to the example method 300 in the description of the example method 400. Certain blocks of the method 400 may be omitted in certain examples.

In the example method 400, the certificate is generated, by the CA, on the first public key and signed by the CA private key to bind the first identity to the third identity. An additional certificate (i.e., Cert(Gpk,Ssk)) may be generated, by the computing device (e.g., by the secure component 302a), on the second public key and signed by the first private key to bind the second identity to the first identity. The method 400 comprises, at block 402, verifying the additional certificate by using the first public key.

In some examples, the method 400 further comprises, at block 404, in response to successfully verifying the certificate, the additional certificate and the received signature, providing an indication that the received log is authentic (i.e., that the log has been produced by a computing device comprising a component (i.e., secure component 302a) that has been certified by the CA 308).

Figure 5 shows an example method 500 of verifying certain information. The method 500 may be a computer-implemented method (e.g., using processing circuitry). The method 500 may be implemented by a certificate authority such as CA 308. Although reference is made to certain entities mentioned in the example method 300, the overall flow of data is different to that shown by Figure 3, as described in more detail below. Certain blocks of the method 500 may be omitted in certain examples.

In some examples, at block 502 of the method 500, the CA 308 verifies that the second public key (Gpk) has been certified by the first identity by verifying that an additional certificate (Cert(Gpk,Ssk)) generated, by the computing device, on the second public key was signed by the first private key by using the first public key (which is made available to the CA 308). For example, the additional certificate generated by the secure component 302a is sent to the CA 308, which verifies that the additional certificate was indeed generated by the secure component 302a. The 'additional certificate' may not actually be needed by the remote admin 306.

In some examples, at block 504 of the method 500, the certificate (used by the remote admin 306 and as referred to in the method 100) is generated, by the CA 308, on the second public key (i.e., Gpk) and signed by the CA private key (i.e., Csk) to bind the second identity to the third identity in response to the CA 308 verifying that the second public key has been certified by the first identity. That is, once the 'additional certificate' has been verified, the CA 308 trusts that the second public key, Gpk, is cryptographically linked to the first identity, which is itself trusted by the CA 308. Thus, the second identity may be bound to the third identity based on verification of the additional certificate.

Thus, according to the example method 500, the CA 308 may generate the certificate and cause the certificate to be sent to the remote admin 306, which uses CA's public key, Cpk, to verify the certificate, and hence authenticate the signed log produced by the generating component 302b. The method 300 may therefore be modified in accordance with the method 500 in such a way that certain keys/certificates are not needed by the remote admin 306.

For example, the secure component 302a could certify Gpk, and this certificate (Cert(Gpk,Ssk)) be sent to the CA 308, who could then certify Gpk themselves using Csk to generate Cert(Gpk,Csk). This certificate, Cert(Gpk,Csk), could then be sent to the remote admin 306. This example may mean that the remote admin 306 doesn't need the static signing component public key Spk (i.e., to avoid the need to verify Cert(Cpk,Ssk) using Spk, as in the example method 300), and could verify the certificate on Gpk using Cpk, and then verify the signature on the log using Gpk. Therefore, in some cases, the Spk may not need to be shared, which may enhance privacy. Further, the amount of data received (e.g., a single certificate instead of two certificates) and computation required (e.g., since verifying a single certificate may be faster and more efficient than verifying two certificates) by the remote admin 306 may be reduced (i.e., compared with the example method 300).

As will be described in more detail below, there may be numerous variations to the example architecture 200 and/or the flowchart as described in relation to Figure 3. Reference is made to the entities referred to in the example architecture 200 and the example method 300.

In some examples, the generating component 302b may be any component on a computing device that generates or collects analytics data. As noted previously, an example of a generating component 302b is an EpSC.

In some examples, rather than the generating component 302b generating the analytics data itself, the generating component 302b may instead gather the information about the computing system (such as information regarding: an 'event', an identity of another (responding) component on the computing device or computing system and/or whether such a component is responding, etc.) on behalf of another component and use its key (Gsk) to sign and witness the gathered data. For example, the EpSC may collect information from other devices, components or systems associated with the computing system or computing device itself and then sign such information. Examples of such information from other devices, components or systems include: firmware integrity or configuration data, information regarding another component's identity (e.g., the identity itself or some other indication of identity), information regarding events such as a component responding to requests from the generating component 302b, etc.

In some examples, there may be multiple generating components 302b on the same computing device, which all have their own identities (i.e., asymmetric key pairs), which may be certified by the same secure component 302a or different secure components 302a (if multiple secure components 302a are present).

In some examples, the secure component 302a could be any component on the same computing device as the generating component 302b. The secure component 302a may have a (certified) long term identity. As noted previously, an example of the secure component 302a may be a TPM, which has a certified, persistent, identity (e.g., DevID).

In some examples, a TPM is the component of a computing device that represents a cryptographic identity for the computing device. The TPM may support a number of different key types and may have a unique 'Endorsement Key' (EK) certified by the TPM vendor. However, the EK identifies the component itself. The Device Identity (DevID) standard defined by IEEE 802.1AR is an X509v3 certificate that is certified by the Original Equipment Manufacturer (OEM) to represent a unique, persistent identity of the device. The trusted computing group (TCG) defines standards for creating such a key and certificate using the TPM (e.g., to bind a key in the TPM to the OEM-defined identity of the device). However, this identity represents the platform generally and does not represent other components (such as the generating component 302b) of the computing device.

In some examples, the generating component 302b and secure component 302a may be the same component. For example, the secure component 302a may comprise the generating component 302b (or vice versa) so that the computing device has both a persistent identity (first identity) and a second identity generated after the first identity. By way of example, the first identity of the computing device may be generated in the factory and collected by the CA 308, which is then used to sign/certify 'ephemeral', or 'shorter-lived' keys generated in the field on the same component.

In some examples, rather than (i) the CA 308 giving the certificate on Spk to the secure component 302a, (ii) the secure component 302a giving the certificate on Gpk to the generating component 302b, and (iii) the generating component 302b passing both certificates to the remote admin 306, the certificates may instead be provided through other bands of communication. For example, the CA 308 may provide the remote admin 306 with the certificate on Spk directly, without either the secure component 302a or the generating component 302b being involved.

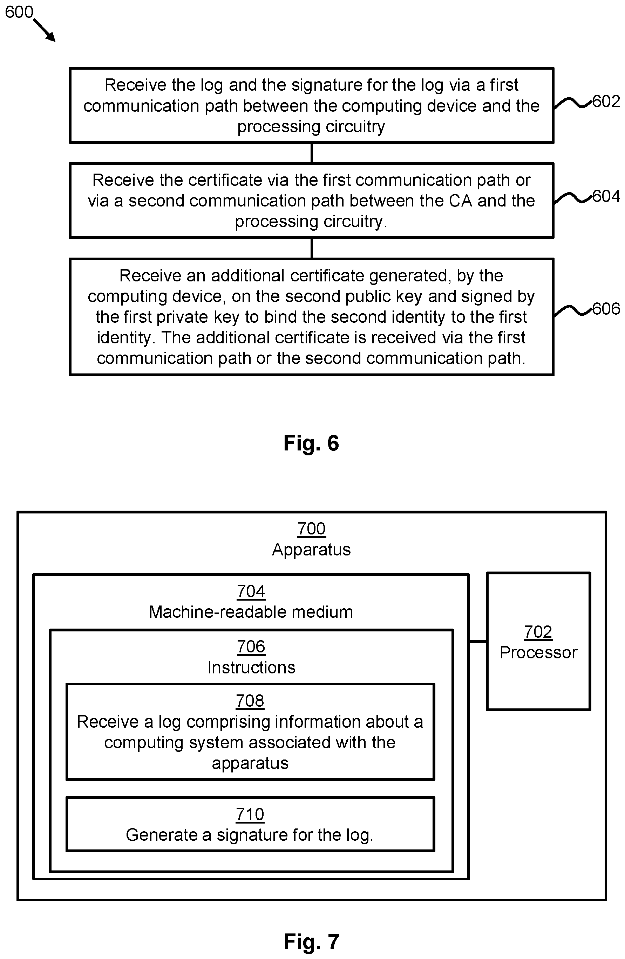

Figure 6 is an example method 600 of receiving a certificate, as referred to in the above example. The method 600 may be a computer-implemented method (e.g., using processing circuitry). The method 600 may be implemented by a third party such as a remote admin 306. The method 600 may comprise or be implemented in conjunction with the method 100. Reference is made to the example method 300 in the description of the example method 600. Certain blocks of the method 600 may be omitted in certain examples.

The method 600 comprises, at block 602, receiving the log and the signature for the log via a first communication path between the computing device and the processing circuitry (of the remote admin 306).

The method 600 further comprises, at block 604, receiving the certificate via the first communication path or via a second communication path between the CA 308 and the processing circuitry (of the remote admin 306). For example, the second communication path may not be via the computing device but instead via a different network between the CA 308 and the remote admin 306 (such as via the cloud 204 depicted by Figure 2).

In some examples, the method 600 further comprises, at block 606, receiving an additional certificate generated, by the computing device, on the second public key and signed by the first private key to bind the second identity to the first identity. The additional certificate may be received via the first communication path or the second communication path.

The examples referred to above relate to the functionality of the remote admin 306 and/or the CA 308. The examples described below refer to the functionality of the computing device.

Figure 7 is a schematic illustration of an example apparatus 700 for implementing or at least partially facilitating functionality associated with certain methods described above (e.g., methods 100, 300, 400, 500, 600). The apparatus 700 comprises a processor 702 and a non-transitory machine-readable medium 704 storing instructions 706 readable and executable by the processor 702. The apparatus 700 may be implemented by a component (e.g., a generating component such as an EpSC and/or a secure component such as a TPM) of the computing device described previously. Reference is made to features and functionality of previous figures, where appropriate.

The instructions 706 comprise further instructions 708, 710 to cause the processor 702 to implement the functionality recited by the further instructions 708, 710.

The instructions 708 are to cause the processor 702 to receive a log comprising information about a computing system associated with the apparatus. The apparatus comprises a first identity bound to a third identity of a certificate authority (CA) and a second identity bound to the first identity.

The first identity comprises a first public key and an associated first private key.

The second identity comprises a second public key and an associated second private key.

The third identity comprises a CA public key and an associated CA private key.

The instructions 710 are to cause the processor 702 to generate a signature for the log. The log is signed by the second private key.

Thus, the apparatus 700 may at least partially facilitate the implementation of the method 100 (and other methods described herein). In some examples, the apparatus 700 may be a component of a computing device associated with the computing system where the log received by the apparatus 700 is signed by apparatus 700 using the second private key, Gsk (i.e., as implemented by the generating component 302b). In some examples, the associated second public key, Gpk, of the apparatus 700 may be used to verify the signature on the log.

The instructions 708 refer to the apparatus 700 receiving the log. In some examples, the apparatus 700 itself may 'receive' the log by generating the log (e.g., in accordance with other instructions for generating the log based on data received from the computing system). In some examples, the apparatus 700 may receive the log from another component or the computing system (e.g., the log may be produced by the computing system itself).

Certain examples relating to the apparatus 700 are described below.

In some examples, the first identity is generated by a secure component of the apparatus (e.g., a TPM).

In some examples, the second identity is generated by a generating component of the apparatus (e.g., an EpSC) used to generate the log and the signature for the log. In some examples, the second identity is generated by the secure component.

In some examples, a secure channel (such as using the BIOS procedure described above) is provided between the secure component and the generating component.

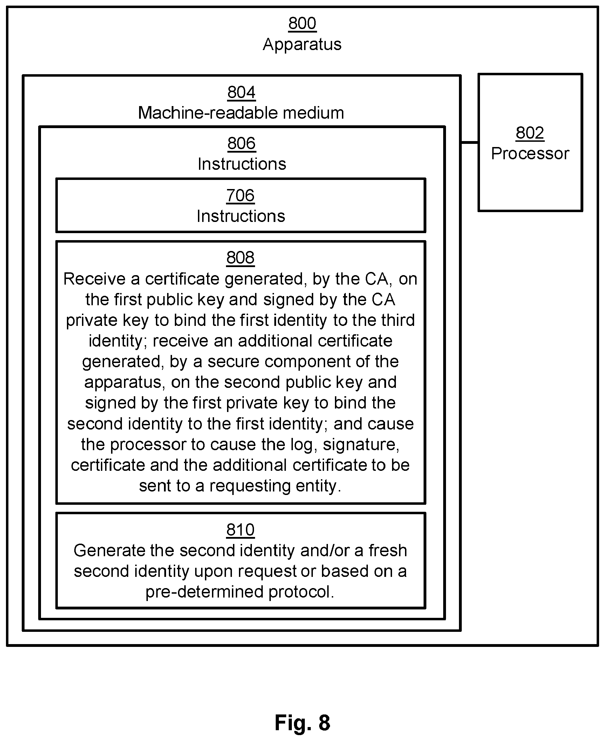

Figure 8 is a schematic illustration of an example apparatus 800 for implementing or at least partially facilitating functionality associated with certain methods described above (e.g., methods 100, 300, 400, 500, 600). The apparatus 800 comprises a processor 802 and a non-transitory machine-readable medium 804 storing instructions 806 readable and executable by the processor 802. As with apparatus 700, the apparatus 800 may be implemented by a component (e.g., a generating component such as an EpSC and/or a secure component such as a TPM) of the computing device described previously. In this example, the instructions 806 comprise the instructions 706 implemented by the apparatus 700. Certain instructions may be omitted in certain examples or performed in a different order to that shown.

In some examples, the instructions 806 comprise further instructions 808 to cause the processor 802 to receive a certificate generated, by the CA 308, on the first public key and signed by the CA private key to bind the first identity to the third identity. The instructions 808 further cause the processor 802 to receive an additional certificate generated, by a secure component of the apparatus, on the second public key and signed by the first private key to bind the second identity to the first identity. The instructions 808 further cause the processor 802 to cause the log, signature, certificate and the additional certificate to be sent to a requesting entity (e.g., a third party such as the remote admin 306). The instructions 808 may substantially correspond to the implementation of certain parts of the example method 300 by the generating component 302b.

In some examples, the instructions 806 comprise further instructions 810 to cause the processor 802 to generate the second identity and/or a fresh second identity upon request or based on a pre-determined protocol.

As noted previously, the second identity may be generated after the first (e.g., persistent) identity has been generated. The second identity may be another persistent identity or may be a fresh (e.g., a temporary and/or new) identity. For example, the second identity may be generated and stored by the computing device for future use and/or may be generated when needed (e.g., if the user context changes such as in a DaaS scenario). An entity such as the remote admin 306 may request the fresh identity or there may be a pre-determined protocol for deciding when the fresh identity is to be generated. In some examples, the pre-determined protocol may be a certain amount of time elapsed, re-boot event, change of user, etc. Various examples relating to the generating of the second identity are described below.

In some examples, the generating component 302b may generate a fresh asymmetric key pair at the request of the manager of the computing device (e.g., the remote admin 306 or another entity). For example, the manager may send a signed 'generateCertifiedKey' request that could tell the generating component 302b to generate a new key and override previous keys in accordance with any appropriate example described herein.

In some examples, if at some point after deployment there exists no key on the generating component 302b, then an auto-generate command (e.g., of a pre-determined protocol') may instruct the generating component 302b to generate a new key. In some examples, such a command could specify additional policies such as how long the key should exist for (e.g., before being changed), what happens if say the platform is reset to factory settings (or other BIOS resets) or who (which entity) could certify a key change, etc.

In some examples, the generating component 302b may also have multiple asymmetric keys, potentially in a key hierarchy (e.g., where one key certified by the secure component 302a signs other keys), or all certified by the secure component 302a. The multiple keys may be used for multiple different purposes (such as one for signing logs, one for use in a Diffie-Hellman procedure to establish a shared key, one for certifying other keys, etc.).

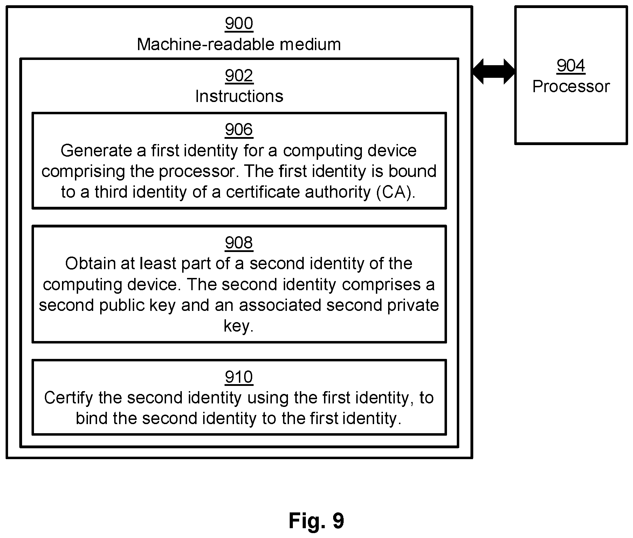

Figure 9 schematically illustrates an example machine-readable medium 900 (e.g., a non-transitory machine-readable medium) which stores instructions 902 which, when executed by a processor 904 (e.g., 'processing circuitry'), cause the processor 904 to facilitate the implementation of certain methods described herein (e.g., method 100, 300, 400, 500, 600) and/or implement functionality of or related to certain apparatus described herein (e.g., apparatus 700, 800). In this example, the machine-readable medium 900 is implemented by the secure component 302a (e.g., a TPM) of a computing device such as described above.

The non-transitory machine readable medium 900 stores instructions 902 readable and executable by the processor 904 to cause the processor 904 to implement the functionality defined by the following instructions.

The instructions 902 comprise instructions 906 to cause the processor 904 to generate a first identity for a computing device comprising the processor 904. The first identity is bound to a third identity of a certificate authority (CA).

The first identity comprises a first public key and an associated first private key.

The third identity comprises a CA public key and an associated CA private key.

The instructions 902 comprise further instructions 908 to cause the processor 904 to obtain at least part of a second identity of the computing device, where the second identity comprises a second public key and an associated second private key. The processor 904 may 'obtain' at least part of the second identity by generating or receiving the at least part of the second identity. For example, the second identity may be generated by the secure component 302a itself or may be received from another component such as the generating component 302b.

The instructions 902 comprise further instructions 910 to cause the processor 904 to certify the second identity using the first identity, to bind the second identity to the first identity.

Thus, the machine readable medium 900 may facilitate the binding of the second identity to the first identity, as referred to in various examples described herein which mention the functionality of the secure component 302a. Further examples relating to the machine readable medium 900 are described below.

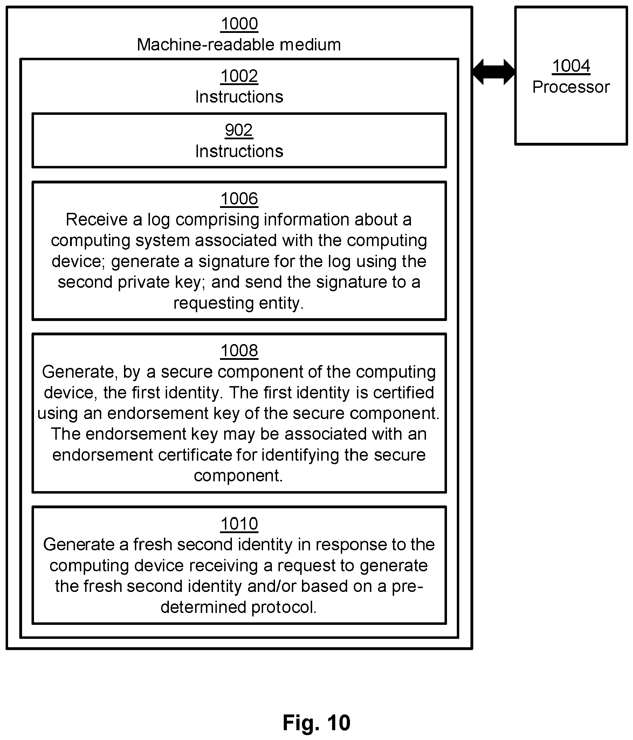

Figure 10 schematically illustrates an example machine-readable medium 1000 (e.g., a non-transitory machine-readable medium) which stores instructions 1002 which, when executed by a processor 1004 (e.g., 'processing circuitry'), cause the processor 1004 to facilitate the implementation of certain methods described herein (e.g., method 100, 300, 400, 500, 600) and/or implement functionality of or related to certain apparatus described herein (e.g., apparatus 700, 800). In this example, the machine-readable medium 1000 is implemented by the secure component 302a (e.g., a TPM) of a computing device such as described above. Certain instructions according to the examples described below may be omitted or performed in a different order to that shown by Figure 10. In this example, the instructions 1002 comprise the instructions 902 of Figure 9.

In some examples, the instructions 1002 comprise further instructions 1006 to cause the processor 1004 to receive a log comprising information about a computing system associated with the computing device; generate a signature for the log using the second private key; and send the signature to a requesting entity. This example refers to a scenario where the secure component 302a is used to sign the logs (produced by the generating component 302b, which sends the logs to the secure component 302a for signing). The requesting entity may be the generating component 302b itself, the remote admin 306 or another entity. Thus, instead of the generating component 302b having a signing function, the secure component 302a may be used for signing the logs instead, where the secure component 302a is provided with the second identity.

In some examples, the first identity and the second identity may be generated by a secure component 302a of the computing device and, in use, the secure component 302a may sign logs generated by a generating component 302b of the computing device.

In some examples, the instructions 1002 comprise further instructions 1008 to cause the processor 1004 to generate, by a secure component 302a of the computing device, the first identity. The first identity is certified using an endorsement key of the secure component 302a. The endorsement key may be associated with an endorsement certificate for identifying the secure component 302a. Thus, the first identity may be produced based on the certified endorsement key in accordance with a key hierarchy in the secure component 302a such that the secure component 302a may provide certain functionality of a certificate authority. In other words, it may not be necessary to use the CA 308 in some examples. Instead, the remote admin 308 may have sufficient trust in the secure component 302a.

In some examples, the instructions 1008 may further cause the processor 1004 to receive or generate, by the secure component 302a, the second public key and certify, by the secure component, the second identity using the first identity. The certificate associated with the EK may identify the secure component 302a while a 'DevID' (as a 'first identity') may be produced based on the EK.

In other words, the CA may not need to be a secure CA e.g., in the factory. In the case of a TPM's DevID workflow, where the endorsement certificate is collected. The secure component 302a may generate and use a restricted signing key in the platform hierarchy (e.g., controlled by the BIOS) to create a platform DevID (e.g., in collaboration with the use of the endorsement certificate) at a later point. The DevID may then be used to certify the second public key, in a similar manner to certain examples described above, albeit the location of the CA is different.

In some examples, the instructions 1002 comprise further instructions 1010 to cause the processor 1004 to generate a fresh second identity in response to the computing device receiving a request to generate the fresh second identity and/or based on a pre-determined protocol.

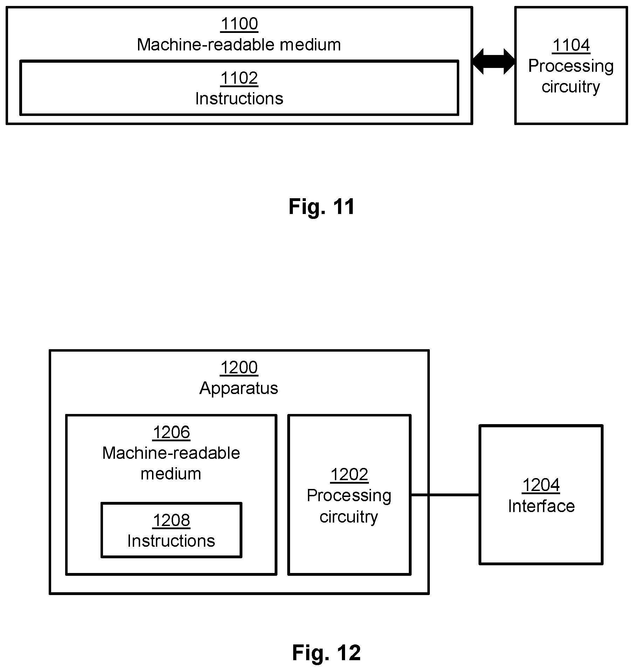

Figure 11 schematically illustrates an example machine-readable medium 1100 (e.g., a non-transitory machine-readable medium) which stores instructions 1102 which, when executed by processing circuitry 1104 (e.g., a (e.g., at least one) processor), cause the processing circuitry 1004 to carry out certain methods described herein (e.g., method 100, 300, 400, 500, 600), implement other examples relating to the architecture 200 and/or implement functionality of the apparatus 700, 800 and/or machine-readable media 900, 1000. In other words, any method or functionality implemented by any example described herein may be implemented by the instructions 1102. Thus, with the appropriate instructions, the machine-readable medium 1100 may implement the functionality of any of the entities referred to in Figures 2 and 3 (i.e., the secure component 302a, generating component 302b, remote admin 306, CA 308, etc.).

Figure 12 is a schematic illustration of an example apparatus 1200 for implementing or at least partially facilitating certain methods or machine-readable media described herein (e.g., certain blocks of methods 100, 300, 400, 500, 600, certain instructions of apparatus 700, 800, certain instructions of machine-readable media 900, 1000 and/or certain functionality of the architecture 200, etc.). The apparatus 1200 comprises processing circuitry 1202 communicatively coupled to an interface 1204 (e.g., implemented by a communication interface) for communicating with other entities referred to in Figures 2 and 3 (e.g., if the apparatus 1200 is implemented by the remote admin 306, the interface 1204 may receive data (e.g., logs, public keys, certificates, etc.) associated with the computing device, CA, etc.). Thus, with the appropriate instructions, the apparatus 1200 may implement the functionality of any of the entities referred to in Figures 2 and 3 (i.e., the secure component 302a, generating component 302b, remote admin 306, CA 308, etc.).

Any of the blocks, nodes, instructions or modules described in relation to the figures may be combined with, implement the functionality of or replace any of the blocks, nodes, instructions or modules described in relation to any other of the figures. For example, methods may be implemented as machine-readable media or apparatus, machine-readable media may be implemented as methods or apparatus, and apparatus may be implemented as machine-readable media or methods. Further, any of the functionality described in relation to any one of a method, machine readable medium or apparatus described herein may be implemented in any other one of the method, machine readable medium or apparatus described herein. Any claims written in single dependent form may be re-written, where appropriate, in multiple dependency form since the various examples described herein may be combined with each other.

Examples in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, etc.) having computer readable program codes therein or thereon.

The present disclosure is described with reference to flow charts and block diagrams of the method, devices and systems according to examples of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing circuitry, or a module thereof, may execute the machine-readable instructions. Thus, functional nodes, modules or apparatus of the system and other devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the scope of the present disclosure. It is intended, therefore, that the method, apparatus and related aspects be limited by the scope of the following claims and their equivalents. It should be noted that the above-mentioned examples illustrate rather than limit what is described herein, and that many implementations may be designed without departing from the scope of the appended claims. Features described in relation to one example may be combined with features of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method, comprising:
receiving:
a log comprising information about a computing system, where the log is sent by a computing device associated with the computing system, where the computing device comprises a first identity bound to a third identity of a certificate authority (CA) and a second identity bound to the first identity, where:
the first identity comprises a first public key and an associated first private key;
the second identity comprises a second public key and an associated second private key; and
the third identity comprises a CA public key and an associated CA private key; and
a signature for the log, where the log is signed by the second private key; and
verifying, using processing circuitry:
a certificate indicative of the second identity having been certified, where the CA public key is used to verify the certificate; and
the received signature by using the second public key.

2. The method of claim 1, where:
the certificate is generated, by the CA, on the first public key and signed by the CA private key to bind the first identity to the third identity; and
an additional certificate is generated, by the computing device, on the second public key and signed by the first private key to bind the second identity to the first identity, the method further comprising:
verifying the additional certificate by using the first public key.

3. The method of claim 2, comprising, in response to successfully verifying the certificate, the additional certificate and the received signature, providing an indication that the received log is authentic.

4. The method of claim 1, where:
the certificate is generated, by the CA, on the second public key and signed by the CA private key to bind the second identity to the third identity in response to the CA verifying that the second public key has been certified by the first identity.

5. The method of claim 1, comprising:
receiving the log and the signature for the log via a first communication path between the computing device and the processing circuitry; and
receiving the certificate via the first communication path or via a second communication path between the CA and the processing circuitry.

6. The method of claim 5, further comprising receiving an additional certificate generated, by the computing device, on the second public key and signed by the first private key to bind the second identity to the first identity, where the additional certificate is received via the first communication path or the second communication path.

7. Apparatus comprising:
a processor; and
a non-transitory machine-readable medium storing instructions readable and executable by the processor to cause the processor to:
receive:
a log comprising information about a computing system associated with the apparatus, where the apparatus comprises a first identity bound to a third identity of a certificate authority (CA) and a second identity bound to the first identity, where:
the first identity comprises a first public key and an associated first private key;
the second identity comprises a second public key and an associated second private key; and
the third identity comprises a CA public key and an associated CA
private key; and
generate a signature for the log, where the log is signed by the second private key.

8. The apparatus of claim 7, where the instructions comprise further instructions to cause the processor to:
receive a certificate generated, by the CA, on the first public key and signed by the CA private key to bind the first identity to the third identity;
receive an additional certificate generated, by a secure component of the apparatus, on the second public key and signed by the first private key to bind the second identity to the first identity; and
cause the log, signature, certificate and the additional certificate to be sent to a requesting entity.

9. The apparatus of claim 7, where:
the first identity is generated by a secure component of the apparatus;
the second identity is generated by a generating component of the apparatus used to generate the log and the signature for the log; and
a secure channel is provided between the secure component and the generating component.

10. The apparatus of claim 7, where the instructions comprise further instructions to cause the processor to:
generate the second identity and/or a fresh second identity upon request or based on a pre-determined protocol.

11. A non-transitory machine-readable medium storing instructions readable and executable by the processor to cause the processor to:
generate a first identity for a computing device comprising the processor, where the first identity is bound to a third identity of a certificate authority (CA), where:
the first identity comprises a first public key and an associated first private key; and
the third identity comprises a CA public key and an associated CA private key;
obtain at least part of a second identity of the computing device, where the second identity comprises a second public key and an associated second private key; and
certify the second identity using the first identity, to bind the second identity to the first identity.

12. The non-transitory machine-readable medium of claim 11, where the instructions comprise further instructions to cause the processor to:
receive a log comprising information about a computing system associated with the computing device;
generate a signature for the log using the second private key; and
send the signature to a requesting entity.

13. The non-transitory machine-readable medium of claim 11, where the instructions comprise further instructions readable and executable by the processor to cause the processor to:
generate, by a secure component of the computing device, the first identity, where the first identity is certified using an endorsement key of the secure component, where the endorsement key is associated with an endorsement certificate for identifying the secure component.

14. The non-transitory machine-readable medium of claim 11, where the first identity and the second identity are generated by a secure component of the computing device, where the secure component is to sign logs generated by a generating component of the computing device.

15. The non-transitory machine-readable medium of claim 11, where the non-transitory machine-readable medium comprises further instructions to cause the processor to generate a fresh second identity in response to the computing device receiving a request to generate the fresh second identity and/or based on a pre-determined protocol.
